# EUROPÄISCHE PATENTANMELDUNG

(11) **EP 3 882 490 A1**
(43) Veröffentlichungstag der Anmeldung: **22.09.2021**
(21) Anmeldenummer: 20163335.1
(22) Anmeldetag: 16.03.2020
(51) Int. Cl.: F16H 57/00, F16H 57/08, F16D 1/10, F16D 1/116, F16H 1/28

(54) **STIRNRADANORDNUNG MIT VERBESSERTER ZENTRIERUNG**

(71) Anmelder: Flender GmbH, 46395 Bocholt (DE)
(72) Erfinder: Vossschmidt, Tim, 45899 Gelsenkirchen (DE)
(74) Vertreter: Michalski Hüttermann & Partner Patentanwälte mbB

(57) **Zusammenfassung**

Die Erfindung betrifft eine Stirnradanordnung (30), die ein Stirnrad (10) und eine Welle (20) umfasst. Dabei ist das Stirnrad (10) über eine Kurzverzahnung (16, 22) auf der Welle (20) aufgenommen und das Stirnrad (10) im Bereich einer ersten Stirnseite (13) durch eine erste Zentriervorrichtung (42) an der Welle (20) zentriert. Erfindungsgemäß ist die erste Zentriervorrichtung (42), als abgesetzter Abschnitt (24) der Kurzverzahnung (16, 24) ausgebildet ist. Die Erfindung betrifft auch ein Planetengetriebe (60), das über eine solche Stirnradanordnung (30) verfügt. Ferner betrifft die Erfindung einen Antriebsstrang (70) für eine Windkraftanlage (80), der mit einem solchen Planetengetriebe (60) ausgestattet ist und eine korrespondierende Windkraftanlage (80).

## Beschreibung

Die Erfindung betrifft eine Stirnradanordnung mit verbesserter Zentrierung und ein Planetengetriebe, das über eine entsprechende Stirnradanordnung verfügt. Die Erfindung betrifft gleichermaßen einen Antriebsstrang, der ein solches Planetengetriebe aufweist und eine Windkraftanlage mit einem derartigen Antriebsstrang.

Aus der Offenlegungsschrift JP 2012 112454 A ist eine Planetengetriebestufe bekannt, die ein Sonnenrad umfasst, das auf einer Welle angeordnet ist. Das Sonnenrad ist über eine Kurzverzahnung mit der Welle gekoppelt und kämmt mit einem Planetenrad.

Die Patentschrift US 9,631,558 B2 offenbart ein Getriebe in einem Turboantrieb eines Luftfahrzeugs, das eine Eingangskupplung aufweist, auf der ein Sonnenrad angeordnet ist. Das Sonnenrad ist über eine Keilverzahnung mit der Eingangskupplung verbunden. Das Sonnenrad stützt sich im montierten Zustand an einem Vorsprung in Axialrichtung ab.

In einer Vielzahl an technischen Anwendungen werden Planetengetriebe unterschiedlicher Größen eingesetzt. Es besteht der Wunsch, leistungsfähigere, kompaktere, langlebigere und kosteneffizientere Planetengetriebe bereitzustellen. Ebenso wird eine Reduzierung bei der Geräuschentwicklung im Betrieb angestrebt. Der Erfindung liegt die Aufgabe zugrunde, ein Planetengetriebe bereitzustellen, das in zumindest einem der skizzierten Aspekte eine Verbesserung bietet.

Die Aufgabenstellung wird durch die erfindungsgemäße Stirnradanordnung gelöst, die in einem Planetengetriebe einsetzbar ist. Die Stirnradanordnung umfasst ein Stirnrad, das auf einer Welle angebracht ist. Die Welle und das Stirnrad sind jeweils mit einer Kurzverzahnung versehen, die zu einem gegenseitigen Ineinandergreifen ausgebildet sind. Mittels der Kurzverzahnungen am Stirnrad und an der Welle ist zwischen diesen eine Drehbewegung um eine Hauptdrehachse, beispielsweise eines Planetengetriebes, übertragbar. Die Hauptdrehachse bildet auch die Drehachse des Stirnrads und der Welle. In einem montierten Zustand eines solchen Planetengetriebes kämmt das Stirnrad mit zumindest einer weiteren verzahnten Komponente, beispielsweise einem Planetenrad oder einem Hohlrad. Die Welle weist eine erste Zentriervorrichtung auf, durch die das Stirnrad auf der Welle, bezogen auf die Hauptdrehachse zentrierbar ist. Die erste Zentriervorrichtung ist an der Welle im Bereich einer ersten Stirnseite des Stirnrads ausgebildet.

Erfindungsgemäß ist die erste Zentriervorrichtung als ein abgesetzter Abschnitt der Kurzverzahnung an der Welle oder am Stirnrad ausgebildet. Die erste Zentriervorrichtung ist in Axialrichtung, also entlang der Hauptdrehachse, im Wesentlichen benachbart zur jeweiligen Kurzverzahnung ausgebildet. Die erste Zentriervorrichtung ist im Wesentlichen als Abschnitt der entsprechenden Kurzverzahnung ausgebildet, der einen abweichenden Kopfkreisradius aufweist, insbesondere einen größeren Kopfkreisradius als die entsprechende Kurzverzahnung. Insbesondere kann die erste Zentriervorrichtung die entsprechende Kurzverzahnung in eine Radialrichtung überragen. Die erste Zentriervorrichtung kann dadurch beispielsweise aus einer Rohkurzverzahnung hergestellt werden. Des Weiteren weist die erste Zentriervorrichtung eine reduzierte Axialabmessung auf. Um eine hinreichende Präzision für die erste Zentriervorrichtung zu gewährleisten ist diese mit einer erhöhten Präzision zu fertigen. Aufgrund der reduzierten Axialabmessung wird der Fertigungsaufwand für die erste Zentriervorrichtung verringert. Gleichzeitig bietet die erste Zentriervorrichtung eine exakte Zentrierungsfunktion für das Stirnrad. Eine exakte Zentrierung des Stirnrads auf der Welle ermöglicht einen verschleißarmen und geräuscharmen Betrieb des Stirnrads in einer Stirnradanordnung in Differentialbauweise. Dadurch wird der Einsatz von Stirnradanordnungen in Differentialbauweise auch für Anwendungen praktikabel, die erhöhte Anforderungen an die Genauigkeit bei der Zentrierung des Stirnrads stellen.

In einer Ausführungsform der beanspruchten Stirnradanordnung kann am Stirnrad und/oder an der Welle ein Anschlag ausgebildet sein. Der Anschlag ist zu einem axialen Abstützen des Stirnrads an der ersten Zentriervorrichtung ausgebildet. Beispielsweise kann der Anschlag im Bereich eines Zahngrunds der Kurzverzahnung am Stirnrad ausgebildet sein. Durch einen Anschlag zum axialen Abstützen des Stirnrads sind auch Stirnräder mit einer Schrägverzahnung als Laufverzahnung in einfacher Weise einsetzbar. Insbesondere sind zusätzliche axiale Stützelemente zu einem axialen Abstützen in die entsprechende Axialrichtung entbehrlich. Ergänzend kann ein axiales Stützelement vorgesehen sein, beispielsweise ein Sicherungsring, das zu einem axialen Abstützen in eine entgegengesetzte Axialrichtung, beispielsweise bei einem Reversierbetrieb der Stirnradanordnung, ausgebildet ist. Durch die erste Zentriervorrichtung sind Radialkräfte und Axialkräfte in definierter Weise in die Welle einleitbar. Die erste Zentriervorrichtung kann somit zu einem verbesserten Einleiten einer kombinierten Belastung mit einer Radialkraft und einer Axialkraft ausgelegt werden. Hierdurch wird insgesamt einer erhöhte Materialausnutzung verwirklicht.

Darüber hinaus kann bei der beanspruchten Stirnradanordnung der abgesetzte Abschnitt der Kurzverzahnung an der Welle und/oder an einer Innenseite des Stirnrads in Radialrichtung als Übergangspassung ausgebildet sein. Alternativ kann auch der abgesetzte Abschnitt der Kurzverzahnung am Stirnrad, der als erste Zentriervorrichtung dient, und/oder ein Mantelflächenabschnitt auf der Welle in Radialrichtung als Übergangspassung ausgebildet sein. Eine Übergangspassung bietet ein hohes Maß an Genauigkeit bei der Zentrierung des Stirnrads auf der Welle. Eine Übergangspassung kann in einfacher Weise mit erhöhter Präzision in einem massiven Abschnitt einer Komponente, beispielsweise an der Innenseite des Stirnrads oder einem Mantelflächenabschnitt der Welle hergestellt werden. Der Mantelflächenabschnitt umfasst hierbei beispielsweise auch radiale Vorsprünge auf der Welle. Da die erste Zentriervorrichtung lediglich im Bereich der ersten Stirnseite des Stirnrads ausgebildet ist, weist dieses eine verringerte Axialabmessung auf. Dadurch kann beispielsweise bei gleichbleibendem Fertigungsaufwand eine Übergangspassung mit reduzierten Toleranzen hergestellt werden und so die Genauigkeit der Zentrierung gesteigert werden. Alternativ ist der Fertigungsaufwand auch reduzierbar. Des Weiteren kann in der beanspruchten Stirnradanordnung die Kurzverzahnung an der Welle und/oder am Stirnrad vereinfacht hergestellt werden. Insbesondere wird der Aufwand für Korrekturen an den Kurzverzahnungen vermindert.

In einer weiteren Ausführungsform der beanspruchten Stirnradanordnung ist das Stirnrad im Bereich einer zweiten Stirnseite durch eine zweite Zentriervorrichtung an der Welle zentriert. Die zweite Stirnseite des Stirnrads ist der ersten Stirnseite abgewandt. Die zweite Zentriervorrichtung ist insbesondere in Axialrichtung, also entlang der Hauptdrehachse betrachtet, im Bereich der zweiten Stirnseite ausgebildet. Das Stirnrad ist durch die erste und zweite Zentriervorrichtung mit erhöhter Genauigkeit zentrierbar. Insbesondere wird durch die axial beabstandete Lage der ersten und zweiten Zentriervorrichtung einem Verkippen des Stirnrads aus einer zentrierten Lage entgegengewirkt. Je weiter die erste und zweite Zentriervorrichtung axial voneinander beabstandet sind, umso stärker wird dem Verkippen entgegengewirkt. Die beanspruchte Stirnradanordnung bietet dadurch auch bei erhöhten Betriebslasten ein hohes Maß an Zentrierwirkung für das Stirnrad, was wiederum zu verringertem Verschleiß und reduzierter Geräuschentwicklung führt. Durch die zweite Zentriervorrichtung werden die oben skizzierten Vorteile der beanspruchten Planetenradanordnung in besonderem Ausmaß verwirklicht.

Des Weiteren kann die zweite Zentriervorrichtung einen Bund umfassen, der am Stirnrad ausgebildet ist. Die zweite Zentriervorrichtung umfasst auch einen Zentrierabschnitt an der Welle, der auf deren Mantelfläche ausgebildet sein kann. Der Zentrierabschnitt kann als Abschnitt auf der Welle ausgebildet sein, die zu einem radialen Abstützen des Bunds ausgebildet ist. Der Zentrierabschnitt kann insbesondere durch Bearbeitung auf einer Drehmaschine einfach und präzise hergestellt werden. Der Bund kann einstückig mit dem Stirnrad ausgebildet sein oder als separate Komponente ausgebildet sein, beispielsweise als lösbar befestigbarer Ring. Der Bund kann ferner umlaufend oder unterbrochen, also im Wesentlichen wie eine Keilwelle, ausgebildet sein. Derartige Komponenten, also der Bund am Stirnrad bzw. der Zentrierabschnitt auf der Welle, sind in einfacher Weise mit hoher Genauigkeit herstellbar. Die zweite Zentriervorrichtung ist folglich kosteneffizient herstellbar.

Die zweite Zentriervorrichtung kann einen lösbaren Bund umfassen, der als separate Komponente ausgebildet ist. Das Stirnrad kann an der zweiten Stirnseite eine Ausnehmung aufweisen, in der der Bund aufnehmbar ist. Die Ausnehmung kann in Radialrichtung über eine Übergangspassung verfügen. Hierdurch ist der Bund zum Zentrieren des Stirnrads exakt positionierbar. Die Übergangspassung in der Ausnehmung weist nur geringe Abmessungen auf, so dass der Fertigungsaufwand dafür minimiert ist. Korrespondierend kann der Bund ebenfalls in Radialrichtung an seiner Außenseite und seiner Innenseite mit einer korrespondierenden Passung, beispielsweise einer Übergangspassung, ausgebildet sein. Dadurch, dass der Bund als separate Komponente ausbildbar ist, kann dieser in einfacher Weise auch separat hergestellt werden. Die Handhabung großer und schwerer Komponenten wird somit vermieden, was die Herstellung der beanspruchten Stirnradanordnung vereinfacht. Gleichzeitig bieten Übergangspassungen ein hohes Maß an Zentriergenauigkeit.

Darüber hinaus in der Ausnehmung auf der zweiten Stirnseite des Stirnrads, die zum Aufnehmen des Bunds ausgebildet ist, mindestens eine Bohrung zum Aufnehmen eines Befestigungsmittels ausgebildet sein. Das Befestigungsmittel ist dazu ausgebildet, den Bund lösbar an der zweiten Stirnseite des Stirnrads zu befestigen. Die Bohrung kann beispielsweise als Gewindebohrung zum Aufnehmen einer Schraube ausgebildet sein, die als Befestigungsmittel dient. Alternativ kann sich die Bohrung auch durch das Stirnrad erstrecken und das Befestigungsmittel auf der gegenüberliegenden ersten Stirnseite mit einem komplementären Befestigungsmittel zusammenwirken, beispielsweise einer Mutter. Die Bohrung liegt im Inneren des Stirnrads vor, dessen Belastbarkeit somit zum Ausüben einer Haltekraft auf den Bund nutzbar ist. Im Stirnrad können auch an der zweiten Stirnseite mehrere Bohrungen ausgebildet sein und so eine verbesserte Lastverteilung zum Halten des Bunds erlaubt, was wiederum zu einer erhöhten Lebensdauer der Planetenradanordnung führt.

Ferner kann bei der beanspruchten Stirnradanordnung die Kurzverzahnung an der Welle und/oder am Stirnrad im montierten Zustand der Stirnradanordnung in Radialrichtung kräftefrei ausgebildet sein. Durch die Übertragung der Drehbewegung vom Stirnrad auf die Welle oder umgekehrt treten lediglich Tangentialkräfte auf. Ein kombinierter Spannungszustand aus Radialkräften und Tangentialkräften wird an der jeweiligen Kurzverzahnung vermieden. Darüber hinaus werden in Radialrichtung Relativbewegungen zwischen den Kurzverzahnungen am Stirnrad und der Welle vermieden, die mit erhöhtem Verschleiß einhergehen. Dadurch werden insgesamt verschleißträchtige Beanspruchungszustände in der jeweiligen Kurzverzahnung verringert oder ganz vermieden. Die beanspruchte Stirnradanordnung bietet somit bei reduziertem Fertigungsaufwand eine erhöhte Lebensdauer.

In einer weiteren Ausführungsform der beanspruchten Stirnradanordnung kann die Welle als Nabe eines Planetenträgers ausgebildet sein. Die Nabe kann einstückig mit dem Planetenträger ausgebildet sein oder in Differentialbauweise als separate Komponente mit dem Planetenträger lösbar oder unlösbar verbunden sein. Die beanspruchte Stirnradanordnung erlaubt es dadurch, Sonnenräder mit erhöhtem Durchmesser auszubilden ohne diese einstückig mit dem Planetenträger auszubilden. Je höher der Durchmesser eines Stirnrads ist, umso aufwendiger ist dessen Herstellung aus einem gegossenen Rohteil eines Planetenträgers. Die Stirnradanordnung erlaubt es damit, Planetengetriebe mit großen Sonnenrädern in kosteneffizienter Weise herzustellen. Dies ermöglich beispielsweise die schnelle und einfache Herstellung von Planetengetrieben mit mindestens fünf Planetenrädern in einem Planetenträger und/oder Planetengetrieben mit mindestens drei Planetenstufen.

Die zugrundeliegende Aufgabenstellung wird auch durch das erfindungsgemäße Planetengetriebe gelöst. Das Planetengetriebe weist eine Mehrzahl an Planetenstufen auf, die jeweils einen Planetenträger, ein Hohlrad und ein Stirnrad umfassen. Erfindungsgemäß weist das Planetengetriebe mindestens eine Planetenstufe auf, die eine Stirnradanordnung umfasst, die nach einer der oben beschriebenen Ausführungsformen ausgebildet ist. Das erfindungsgemäße Planetengetriebe ist durch die entsprechende Stirnradanordnung in schneller und kosteneffizienter Weise herstellbar.

In einer Ausführungsform des beanspruchten Planetengetriebes können die Planetenstufen hintereinandergeschaltet sein. Darunter ist zu verstehen, dass eine zugeführte Antriebsleistung unverzweigt durch das Planetengetriebe geführt wird. Durch die skizzierte Stirnradanordnung sind Sonnenräder mit erhöhtem Durchmesser schnell und einfach herstellbar, so dass in der entsprechenden Planetenstufe Planetenräder mit reduziertem Durchmesser einsetzbar sind. Dies wiederum erlaubt die Verwendung von Planetenträgern mit einer erhöhten Anzahl an Planetenrädern, beispielsweise mindestens fünf Planetenrädern. Die technischen Vorzüge derartiger Planetengetriebe werden somit in besonderem Ausmaß verwirklicht.

Die beschriebene Aufgabe wird auch durch den erfindungsgemäßen Antriebsstrang für eine Windkraftanlage gelöst. Der Antriebsstrang umfasst eine Rotorwelle, die mit einem Rotor der Windkraftanlage koppelbar ist. Die Rotorwelle ist drehmomentübertragend mit einem Getriebe verbunden, das wiederum drehmomentübertragend mit einem Generator verbunden. Das Getriebe ist erfindungsgemäß als ein Planetengetriebe nach einer der oben skizzierten Ausführungsformen ausgebildet.

Ebenso wird die oben dargestellte Aufgabenstellung durch die erfindungsgemäße Windkraftanlage gelöst. Die Windkraftanlage umfasst eine Gondel, an der drehbar ein Rotor angebracht ist. In der Gondel ist ein Antriebsstrang aufgenommen, der drehmomentübertragend mit dem Rotor verbunden ist. Erfindungsgemäß ist der Antriebsstrang nach einer der zuvor beschriebenen Ausführungsformen ausgebildet.

Darüber hinaus wird die eingangs dargelegte Aufgabenstellung durch die erfindungsgemäße Industrie-Applikation gelöst. Die Industrie-Applikation umfasst eine Antriebseinheit, die beispielweise als Elektromotor, Verbrennungsmotor oder Hydraulikmotor ausgebildet sein kann. Die Antriebseinheit stellt eine Antriebsleistung zur Verfügung, die einem Getriebe zugeführt wird. Dazu ist die Antriebseinheit drehmomentübertragend mit dem Getriebe verbunden. Das Getriebe wiederum ist drehmomentübertragend mit einer Abtriebseinheit verbunden, der die Antriebsleistung unter veränderter Drehzahl und unter Berücksichtigung von mechanischen Verlusten zur Verfügung gestellt wird. Die Abtriebseinheit kann dabei als mechanische Anwendung ausgebildet sein, so dass die Industrie-Applikation insgesamt beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Es zeigen im Einzelnen:
- FIG 1: schematisch eine erste Ausführungsform der beanspruchten Stirnradanordnung im Längsschnitt;
- FIG 2: schematisch die erste Ausführungsform der beanspruchten Stirnradanordnung in einer geschnittenen Schrägansicht;
- FIG 3: schematisch eine zweite Ausführungsform der beanspruchten Stirnradanordnung im Längsschnitt;
- FIG 4: schematisch eine Ausführungsform der beanspruchten Windkraftanlage;
- FIG 5: schematisch einen Aufbau einer Ausführungsform der beanspruchten Industrieapplikation.

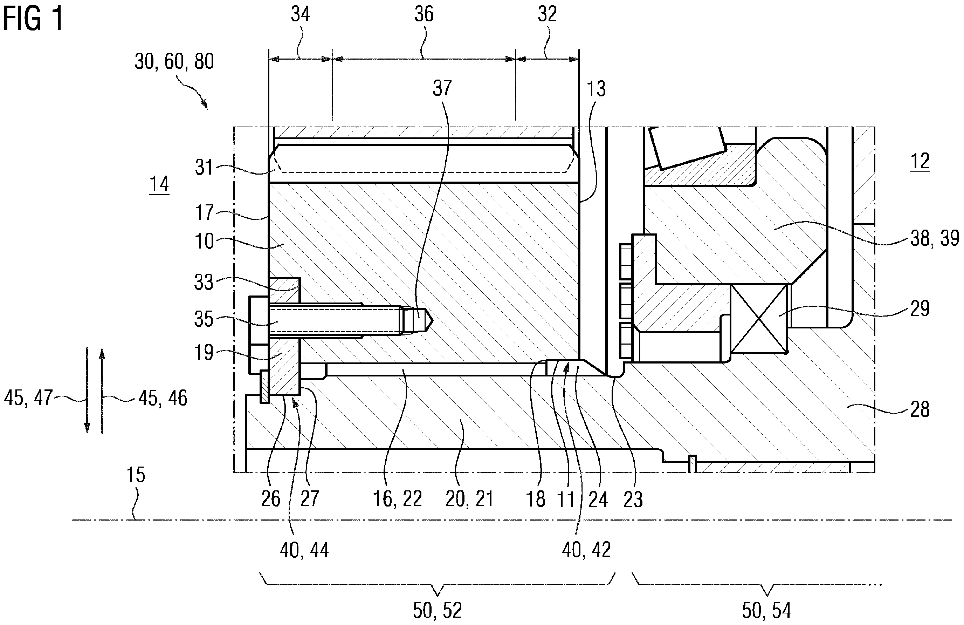

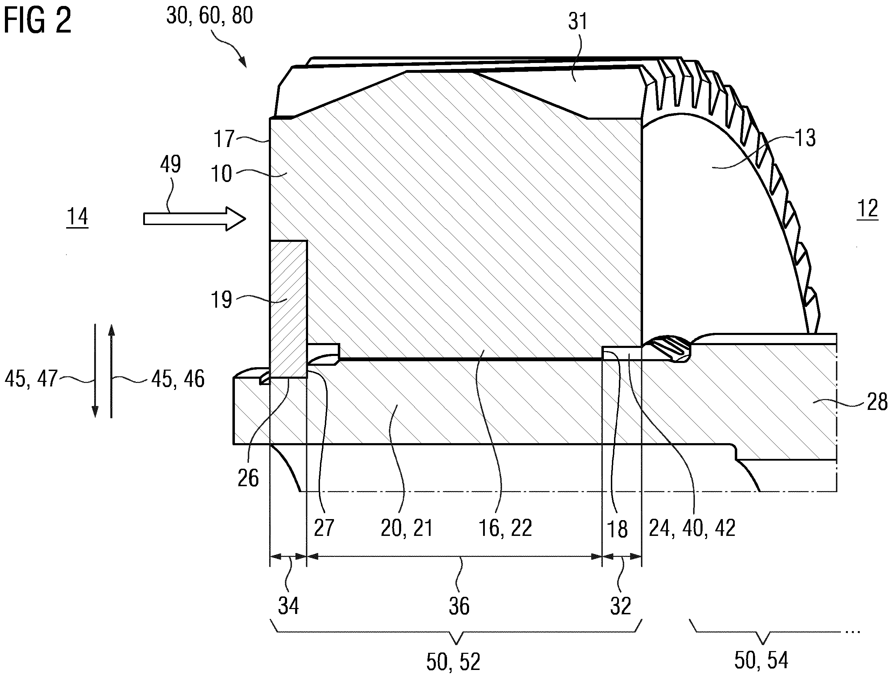

In FIG 1 und FIG 2 ist schematisch eine erste Ausführungsform der beanspruchten Stirnradanordnung 30 im Längsschnitt dargestellt. Die Stirnradanordnung 30 gehört zu einem nicht näher dargestellten Planetengetriebe 60 und umfasst ein Stirnrad 10, das drehfest an einer Welle 20 angeordnet ist. Das Stirnrad 10 weist eine Stirnradverzahnung 31 auf, die als Schrägverzahnung ausgebildet ist. Das Planetengetriebe 60 umfasst eine Mehrzahl an Planetenstufen 50, wobei das Stirnrad 10 einer ersten Planetenstufe 52 zugeordnet ist. Die Welle 20 ist um eine Hauptdrehachse 15 drehbar und als eine Nabe 21 eines Planetenträgers 28 ausgebildet, der zu einer benachbarten zweiten Planetenstufe 54 gehört. Der Planetenträger 28 ist in einem Planetenträgerlager 29 drehbar aufgenommen, das an einem Vorsprung 39 an einer Gehäusewandung 39 angeordnet ist. Die Welle 20 weist an einer Außenseite 23 eine Kurzverzahnung 22 auf, die mit einer Kurzverzahnung 16 an einer Innenseite 11 des Stirnrads 10 kämmt. Über die Kurzverzahnungen 16, 22 am Stirnrad 10 und an der Welle 20 wird zwischen diesen die drehfeste Verbindung hergestellt und es erfolgt ein Übertragen einer Drehbewegung des Stirnrads 10 auf die Welle 20 oder umgekehrt.

Im Bereich einer ersten Stirnseite 13 des Stirnrads 10, die einer Antriebsseite 12 des Planetengetriebes 60 zugewandt ist, ist die Kurzverzahnung 22 der Welle 20 mit einem abgesetzten Abschnitt 24 ausgebildet. Beim abgesetzten Abschnitt 24 weist die Kurzverzahnung 22 einen erhöhten Kopfkreisradius auf, so dass im abgesetzten Bereich 24 die Kurzverzahnung 22 in einem benachbarten Mittelabschnitt 36 in Radialrichtung 45 überragt. Eine radial äußere Richtung ist in FIG 1 und FIG 2 durch den Pfeil 46 dargestellt, eine radial innere Richtung durch den Pfeil 47. An der Innenseite 11 des Stirnrads 10 ist ein Anschlag 18 ausgebildet, durch den sich das Stirnrad 10 am abgesetzten Abschnitt 24 axial, also entlang der Hauptdrehachse 15, abstützt. Ein solches axialen Abstützen ist beispielsweise durch eine Axialkraft 49 hervorrufbar, die sich aus einer Stirnradverzahnung 31 ergibt, die als Schrägverzahnung ausgebildet ist. Der abgesetzte Abschnitt 24 dient als Zentriervorrichtung 40, durch die das Stirnrad 10 bezogen auf die Welle 20, und damit auch auf die Hauptdrehachse 15 bezogen, zentriert wird. Der abgesetzte Abschnitt 24 dient als erste Zentriervorrichtung 42, die durch eine Passung, insbesondere eine Übergangspassung, mit einem ersten Randabschnitt 32 im Bereich der ersten Stirnseite 13 des Stirnrads 10 zusammenwirkt. Aufgrund der geringen Abmessungen der ersten Zentriervorrichtung 42, also des abgesetzten Abschnitts 24, und des ersten Randabschnitts 32 an der Innenseite 11 des Stirnrads 10, ist der Fertigungsaufwand für diese reduziert. Dies erlaubt es, dort schnell und kosteneffizient eine präzise Passung herzustellen, die eine genaue Zentrierung des Stirnrads 10 auf der Welle 20 erlaubt.

Darüber hinaus ist im Bereich einer zweiten Stirnseite 17 des Stirnrads 10, die einer Abtriebsseite 12 des Getriebes 60 zugewandt ist, eine zweite Zentriervorrichtung 44 ausgebildet. Die zweite Zentriervorrichtung 44 umfasst einen Zentrierabschnitt 26, der auf der Außenseite der Welle 20 ausgebildet ist. Im Bereich des Zentrierabschnitts 26 ist ein Zentrieranschlag 27 ausgebildet, der ein axiales Abstützen eines Bunds 19 erlaubt, der im Bereich der zweiten Stirnseite 17 des Stirnrads 10 ausgebildet ist. Der Bund 19 ist im montierten Zustand in einer Ausnehmung 33 aufgenommen, die an der zweiten Stirnseite 17 des Stirnrads 10 ausgebildet ist. Des Weiteren steht der Bund 19 vom Stirnrad 10 in eine radial innere Richtung 47 ab und stützt sich in Radialrichtung 45 am Zentrierabschnitt 26 ab. Im Zusammenspiel mit dem Bund 19 erwirkt der Zentrierabschnitt 26 als zweite Zentriervorrichtung 44 eine Zentrierung des Stirnrads 10 auf der Welle 20. Dazu bilden der Bund 19 und der Zentrierabschnitt 26 eine Passung, insbesondere eine Übergangspassung, aus. Die zweite Zentriervorrichtung 44 ist in einem zweiten Randabschnitt 34 im Bereich der zweiten Stirnseite 17 ausgebildet und weist eine geringe axiale Abmessung auf. Dadurch ist der Fertigungsaufwand für die zweite Zentriervorrichtung 44 verringert. Infolgedessen kann am Zentrierabschnitt 26 und/oder am Bund 19 kosteneffizient eine präzise Passung hergestellt werden. Ferner ist der Bund 19 als separate Komponente ausgebildet, die mit einem Befestigungsmittel 35, das als Schraube ausgebildet ist, lösbar mit dem Stirnrad 10 verbunden. Dazu ist im Stirnrad 10 für das Befestigungsmittel 35 eine geeignete Ausnehmung 37 ausgebildet. Die Ausnehmung 37 erstreckt sind ins Innere des Stirnrads 10, das hinreichende Belastbarkeit bietet und dessen Axialabmessung im Wesentlichen vollständig für die Ausnehmung 37 nutzbar ist. Dies erlaubt es stabile Befestigung des Bunds 19 am Stirnrad 10.

Durch das Zusammenwirken der ersten und der zweiten Zentriervorrichtung 42, 44 wird im Bereich der ersten und zweiten Stirnseite 13, 17 des Stirnrads 10 dieses exakt auf der Welle 20 ausgerichtet. Da der Bund 19 als separate Komponente ausgebildet ist, kann dieser in einfacher Weise separat hergestellt und bearbeitet werden. Die Handhabung größerer Komponenten wie das Stirnrad 10 selbst wird somit vermieden. Die Kurzverzahnungen 16, 22 am Stirnrad 10 und der Welle 20 sind zumindest im Mittelabschnitt 36 derart ausgebildet, dass diese in Radialrichtung 45 kräftefrei sind. Hierdurch werden im Wesentlichen Relativbewegungen zwischen den Stirnrad 10 und der Welle 20 vermieden, die zu erhöhtem Verschleiß führen können. Die Kurzverzahnungen 16, 22 sind im bestimmungsgemäßen Betrieb demnach im Wesentlichen nur in Umlaufrichtung belastet. Hierdurch werden in den Kurzverzahnungen 16, 22 kombinierte Belastungszustände vermieden, die zu erhöhtem Verschleiß führen.

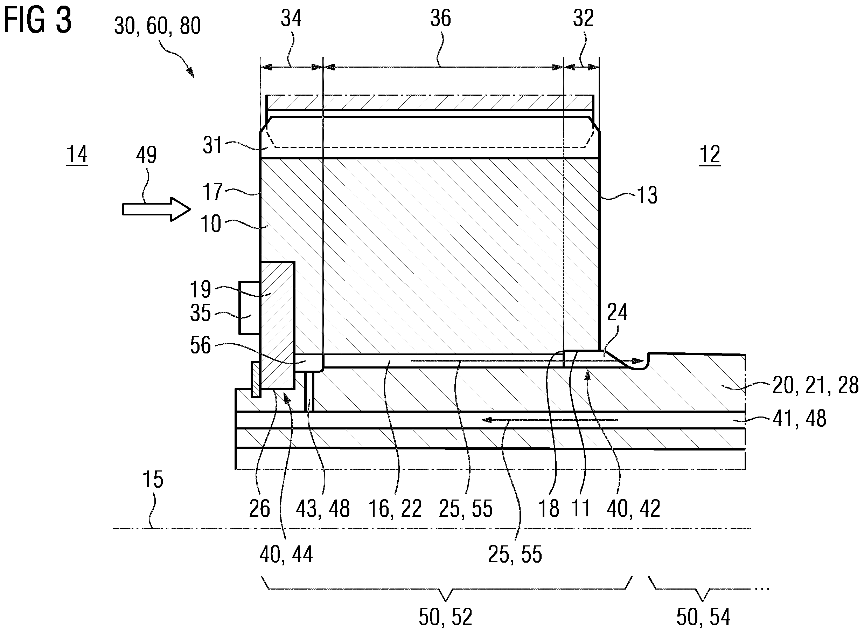

In FIG 3 ist schematisch eine zweite Ausführungsform der beanspruchten Stirnradanordnung 30 im Längsschnitt dargestellt. Die Stirnradanordnung 30 gehört zu einem nicht näher dargestellten Planetengetriebe 60 und umfasst ein Stirnrad 10, das drehfest an einer Welle 20 angeordnet ist. Das Stirnrad 10 weist eine Stirnradverzahnung 31 auf, die als Schrägverzahnung ausgebildet ist. Das Planetengetriebe 60 umfasst eine Mehrzahl an Planetenstufen 50, wobei das Stirnrad 10 einer ersten Planetenstufe 52 zugeordnet ist. Die Welle 20 ist um eine Hauptdrehachse 15 drehbar und als eine Nabe 21 eines Planetenträgers 28 ausgebildet, der zu einer benachbarten zweiten Planetenstufe 54 gehört. Die Welle 20 weist an einer Außenseite 23 eine Kurzverzahnung 22 auf, die mit einer Kurzverzahnung 16 an einer Innenseite 11 des Stirnrads 10 kämmt. Über die Kurzverzahnungen 16, 22 am Stirnrad 10 und an der Welle 20 wird zwischen diesen die drehfeste Verbindung hergestellt und es erfolgt ein Übertragen einer Drehbewegung des Stirnrads 10 auf die Welle 20 oder umgekehrt.

Im Bereich einer ersten Stirnseite 13 des Stirnrads 10, die einer Antriebsseite 12 des Planetengetriebes 60 zugewandt ist, ist die Kurzverzahnung 22 der Welle 20 mit einem abgesetzten Abschnitt 24 ausgebildet. Beim abgesetzten Abschnitt 24 weist die Kurzverzahnung 22 einen erhöhten Kopfkreisradius auf, so dass im abgesetzten Bereich 24 die Kurzverzahnung 22 in einem benachbarten Mittelabschnitt 36 in Radialrichtung 45 überragt. Eine radial äußere Richtung ist in FIG 3 durch den Pfeil 46 dargestellt, eine radial innere Richtung durch den Pfeil 47. An der Innenseite 11 des Stirnrads 10 ist ein Anschlag 18 ausgebildet, durch den sich das Stirnrad 10 am abgesetzten Abschnitt 24 axial, also entlang der Hauptdrehachse 15, abstützt. Der abgesetzte Abschnitt 24 dient als Zentriervorrichtung 40, durch die das Stirnrad 10 bezogen auf die Welle 20, und damit auch auf die Hauptdrehachse 15 bezogen, zentriert wird. Der abgesetzte Abschnitt 24 dient als erste Zentriervorrichtung 42, die durch eine Passung, insbesondere eine Übergangspassung, mit einem ersten Randabschnitt 32 im Bereich der ersten Stirnseite 13 des Stirnrads 10 zusammenwirkt. Aufgrund der geringen Abmessungen der ersten Zentriervorrichtung 42, also des abgesetzten Abschnitts 24, und des ersten Randabschnitts 32 an der Innenseite 11 des Stirnrads 10, ist der Fertigungsaufwand für diese reduziert. Dies erlaubt es, dort schnell und kosteneffizient eine präzise Passung herzustellen, die eine genaue Zentrierung des Stirnrads 10 auf der Welle 20 erlaubt.

Darüber hinaus ist im Bereich einer zweiten Stirnseite 17 des Stirnrads 10, die einer Abtriebsseite 12 des Getriebes 60 zugewandt ist, eine zweite Zentriervorrichtung 44 ausgebildet. Die zweite Zentriervorrichtung 44 umfasst einen Zentrierabschnitt 26, der auf der Außenseite der Welle 20 ausgebildet ist. Im Bereich des Zentrierabschnitts 26 ist ein Zentrieranschlag 27 ausgebildet, der ein axiales Abstützen eines Bunds 19 erlaubt, der im Bereich der zweiten Stirnseite 17 des Stirnrads 10 ausgebildet ist. Der Bund 19 ist im montierten Zustand in einer Ausnehmung 33 aufgenommen, die an der zweiten Stirnseite 17 des Stirnrads 10 ausgebildet ist. Ferner steht der Bund 19 vom Stirnrad 10 in eine radial innere Richtung 47 ab und stützt sich in Radialrichtung 45 am Zentrierabschnitt 26 ab. Im Zusammenspiel mit dem Bund 19 erwirkt der Zentrierabschnitt 26 als zweite Zentriervorrichtung 44 eine Zentrierung des Stirnrads 10 auf der Welle 20. Dazu bilden der Bund 19 und der Zentrierabschnitt 26 eine Passung, insbesondere eine Übergangspassung, aus. Die zweite Zentriervorrichtung 44 ist in einem zweiten Randabschnitt 34 im Bereich der zweiten Stirnseite 17 ausgebildet und weist eine geringe axiale Abmessung auf. Dadurch ist der Fertigungsaufwand für die zweite Zentriervorrichtung 44 verringert. Infolgedessen kann am Zentrierabschnitt 26 und/oder am Bund 19 kosteneffizient eine präzise Passung hergestellt werden. Ferner ist der Bund 19 als separate Komponente ausgebildet, die mit einem Befestigungsmittel 35, das als Schraube ausgebildet ist, lösbar mit dem Stirnrad 10 verbunden. Dazu ist im Stirnrad 10 für das Befestigungsmittel 35 eine geeignete Ausnehmung 37 ausgebildet. Die Ausnehmung 37 erstreckt sind ins Innere des Stirnrads 10, das hinreichende Belastbarkeit bietet und dessen Axialabmessung im Wesentlichen vollständig für die Ausnehmung 37 nutzbar ist. Dies erlaubt es stabile Befestigung des Bunds 19 am Stirnrad 10.

In der Nabe 21, die als Welle 20 dient, ist in Axialrichtung, also entlang der Hauptdrehachse 15, zumindest eine Axialbohrung 41 ausgebildet, durch die ein Schmierstoff 25 leitbar ist. Im Bereich der zweiten Stirnseite 17 des Stirnrads 10, also im zweiten Randabschnitt 32, ist eine Radialbohrung 43 ausgebildet, die in die Axialbohrung 41 mündet. Die Radialbohrung 43 mündet auch in ein Schmierstoffreservoir 56, das durch den Bund 19, die Welle 20 und das Stirnrad 10 begrenzt wird. Das Schmierstoffreservoir 56 ist zu den Kurzverzahnung 16, 22 hin offen ausgebildet, so dass ein Schmierstofffluss 55 durch die Kurzverzahnungen 16, 22 einstellbar ist. Dadurch wird die Schmierstoffversorgung für die Kurzverzahnungen 16, 22 in einfacher Weise ohne zusätzliche Komponenten bereitgestellt. Dadurch, dass die erste und zweite Zentriervorrichtung 42, 44 das Stirnrad 10 auf der Welle 20 zentrieren steht, steht im Mittelabschnitt 36 zwischen den Kurzverzahnungen 16, 22 stets definierter lichter Querschnitt zur Verfügung, der eine zuverlässige Schmierstoffversorgung ermöglicht.

Durch das Zusammenwirken der ersten und der zweiten Zentriervorrichtung 42, 44 wird im Bereich der ersten und zweiten Stirnseite 13, 17 des Stirnrads 10 dieses exakt auf der Welle 20 ausgerichtet. Da der Bund 19 als separate Komponente ausgebildet ist, kann dieser in einfacher Weise separat hergestellt und bearbeitet werden. Die Handhabung größerer Komponenten wie das Stirnrad 10 selbst wird somit vermieden. Die Kurzverzahnungen 16, 22 am Stirnrad 10 und der Welle 20 sind zumindest im Mittelabschnitt 36 derart ausgebildet, dass diese in Radialrichtung 45 kräftefrei sind. Die Kurzverzahnungen 16, 22 sind im bestimmungsgemäßen Betrieb demnach im Wesentlichen nur in Umlaufrichtung belastet. Hierdurch werden in den Kurzverzahnungen 16, 22 kombinierte Belastungszustände vermieden, die zu erhöhtem Verschleiß führen.

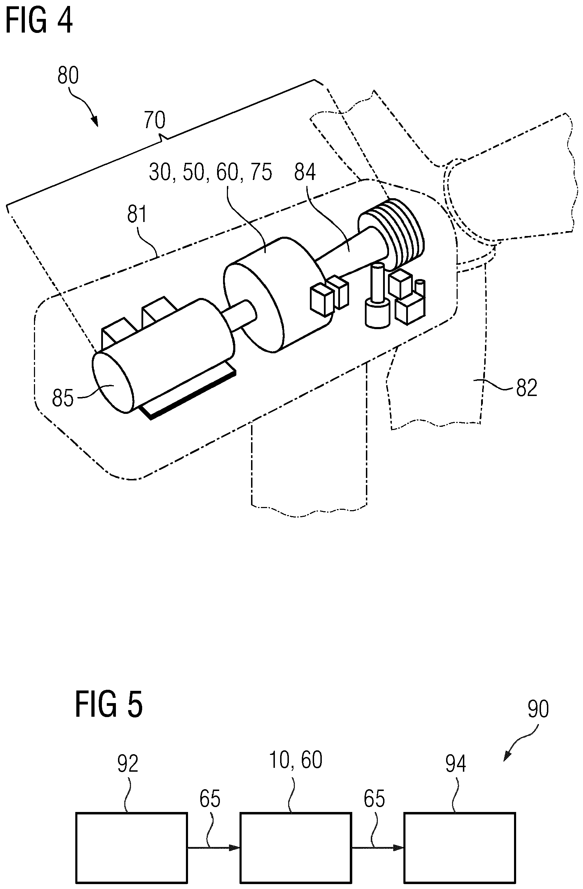

Ferner ist in FIG 4 eine Ausführungsform einer beanspruchten Windkraftanlage 80 dargestellt. Die Windkraftanlage 80 weist einen Rotor 82 auf, der an einer Gondel 81 drehbar angebracht ist. Der Rotor 82 ist mit einer Rotorwelle 84 verbunden, durch die über ein Getriebe 75 ein Generator 85 angetrieben wird. Die Rotorwelle 84, das Getriebe 75 und der Generator 85 gehören zu einem Antriebsstrang 70 der Windkraftanlage 80, der in der Gondel 81 aufgenommen ist. Das Getriebe 75 ist als Planetengetriebe 60 nach einer der oben dargestellten Ausführungsformen ausgebildet und verfügt in zumindest einer Planetenstufe 50 über eine Stirnradanordnung 30 gemäß einer der oben skizzierten Ausführungsformen.

FIG 5 zeigt schematisch den Aufbau einer Ausführungsform der beanspruchten Industrie-Applikation 90. Die Industrie-Applikation 90 weist eine Antriebseinheit 92 und eine Abtriebseinheit 94 auf, die drehmomentübertragend über ein Planetengetriebe 60 miteinander verbunden sind. Die Antriebseinheit 92 ist dazu ausgebildet, eine Antriebsleistung 65 bereitzustellen, die für den Betrieb der Abtriebseinheit 94 notwendig ist. Die Antriebseinheit 92 kann dazu als Elektromotor, Verbrennungsmotor oder Hydraulikmotor ausgebildet sein. Die Abtriebseinheit 94 ist als mechanische Anwendung ausgebildet. Die Abtriebseinheit 94 ist dementsprechend ausgebildet, dass die Industrie-Applikation 90 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Planetengetriebe 60 weist zumindest eine Stirnradanordnung 10 gemäß einer der oben skizzierten Ausführungsformen auf.

## Patentansprüche

1. Stirnradanordnung (30), umfassend ein Stirnrad (10) und eine Welle (20), wobei das Stirnrad (10) über eine Kurzverzahnung (16, 22) auf der Welle (20) aufgenommen ist und das Stirnrad (10) im Bereich einer ersten Stirnseite (13) durch eine erste Zentriervorrichtung (42) an der Welle (20) zentriert ist, **dadurch gekennzeichnet, dass** die erste Zentriervorrichtung (42), als abgesetzter Abschnitt (24) der Kurzverzahnung (16, 24) ausgebildet ist.

2. Stirnradanordnung (10) nach Anspruch 1, **dadurch gekennzeichnet, dass** am Stirnrad (10) oder an der Welle (20) ein Anschlag (18) zu einem axialen Abstützen des Stirnrads (10) an der ersten Zentriervorrichtung (42) ausgebildet ist.

3. Stirnradanordnung (10) nach Anspruch 1 oder 2, **dadurch gekennzeichnet, dass** der abgesetzte Abschnitt (24) der Kurverzahnung (16, 22) und/oder eine Innenseite (11) des Stirnrads (10) in einer Radialrichtung (45) als Übergangspassung ausgebildet sind.

4. Stirnradanordnung (10) nach einem der Ansprüche 1 bis 3, **dadurch gekennzeichnet, dass** das Stirnrad (10) im Bereich einer zweiten Stirnseite (17) durch eine zweite Zentriervorrichtung (44) an der Welle (20) zentriert ist.

5. Stirnradanordnung (10) nach Anspruch 4, **dadurch gekennzeichnet, dass** die zweite Zentriervorrichtung (44) einen Bund (19) am Stirnrad (10) und einen Zentrierabschnitt (26) auf der Welle (20) umfasst.

6. Stirnradanordnung (10) nach Anspruch 5, **dadurch gekennzeichnet, dass** der Bund (19) lösbar mit dem Stirnrad (10) verbunden ist und das Stirnrad (10) an der zweiten Stirnseite (17) eine Ausnehmung (33) mit einer Übergangspassung in Radialrichtung (45) ausgebildet ist.

7. Stirnradanordnung (10) nach Anspruch 5 oder 6, **dadurch gekennzeichnet, dass** auf der zweiten Stirnseite (17) des Stirnrads (10) mindestens eine Ausnehmung (37) zum Aufnehmen eines Befestigungsmittels (35) zum lösbaren Befestigen des Bunds (19) ausgebildet ist.

8. Stirnradanordnung (10) nach einem der Ansprüche 1 bis 7, **dadurch gekennzeichnet, dass** die Kurzverzahnung (16, 22) zwischen dem Stirnrad (10) und der Welle (20) in Radialrichtung (45) im Wesentlichen kräftefrei ausgebildet ist.

9. Stirnradanordnung (10) nach einem der Ansprüche 1 bis 8, **dadurch gekennzeichnet, dass** die Welle (10) als Nabe (21) eines Planetenträgers (28) ausgebildet ist.

10. Planetengetriebe (60), umfassend eine Mehrzahl an Planetenstufen (50, 52, 54), wobei mindestens eine der Planetenstufen (50, 52, 54) eine Stirnradanordnung (10) nach einem der Ansprüche 1 bis 9 umfasst.

11. Planetengetriebe (60) nach Anspruch 10, **dadurch gekennzeichnet, dass** das Planetengetriebe (60) drei hintereinandergeschaltete Planetenstufen (50, 52, 54) aufweist.

12. Antriebsstrang (70) für eine Windkraftanlage (80), umfassend eine Rotorwelle (84) und einen Generator (85), die drehmomentübertragend über ein Getriebe (75) miteinander verbunden sind, **dadurch gekennzeichnet, dass** das Getriebe (74) als Planetengetriebe (60) nach Anspruch 10 oder 11 ausgebildet ist.

13. Windkraftanlage (80), umfassend einen Rotor (82), der mit einer Gondel (84) verbunden ist, und einen Antriebsstrang (70), der in der Gondel (84) aufgenommen ist, **dadurch gekennzeichnet, dass** der Antriebsstrang (70) nach Anspruch 12 ausgebildet ist.

14. Industrie-Applikation (90), umfassend eine Antriebseinheit (92) und eine Abtriebseinheit (94), die mittels eines Planetengetriebes (60) drehmomentübertragend miteinander verbunden sind, **dadurch gekennzeichnet, dass** das Planetengetriebe (60) nach Anspruch 10 oder 11 ausgebildet ist.
